# EUROPEAN PATENT APPLICATION

(11) **EP 2 282 461 A1**
(43) Date of publication of application: **09.02.2011**
(21) Application number: 09768736.2
(22) Date of filing: 19.05.2009
(51) Int. Cl.: H04L 12/58, H04N 7/173, H04L 29/06

(54) **METHOD, DEVICE AND SYSTEM FOR RECOMMENDING MEDIA CONTENT**

(30) Priority: 24.06.2008 CN 200810126527
(71) Applicant: Huawei Technologies Co., Ltd., Longgang District, Shenzhen Guangdong 518129 (CN)
(72) Inventor: ZHU, Wenming, 518129 Shenzhen (CN); QI, Baojian, 518129 Shenzhen (CN)
(74) Representative: Kreuz, Georg Maria
(86) International application number: PCT/CN2009/071854
(87) International publication number: WO 2009/155811

(57) **Abstract**

The present invention relates to the communications field and discloses a method, an apparatus, and a system for recommending media content so that the single form of media content recommendation through selection of Electronic Program Guide (EPG) menus with a bad user experience is solved. The technical solution of the present invention includes: detecting media content recommendation trigger events; generating media content recommendation information according to a preset media content recommendation policy when a media content recommendation trigger event is detected; and sending the generated media content recommendation information to a user terminal. The method, apparatus and system for recommending media content are applicable to Internet Protocol Television (IPTV) networks.

## Description

This application claims priority to Chinese Patent Application No. 200810126527.3, filed with the Chinese Patent Office on June 24, 2008 and entitled "Method, Apparatus and System for Recommending Media Content", which is incorporated herein by reference in its entirety.

### Field of the Invention

The present invention relates to communications technologies, and in particular, to a method, an apparatus, and a system for Internet Protocol Television (IPTV) to recommend media content to a user terminal.

### Background of the Invention

IPTV is a manageable multimedia service that transmits media streams including videos, texts, images and data over an Internet Protocol (IP) network and provides Quality of Service (QoS) assurance, Quality of Experience (QoE) assurance, security, interactivity, and reliability. A user may use IPTV services on a Personal Computer (PC), a television set accompanied by a Set Top Box (STB), or a mobile terminal. The IPTV technology can meet the fast development of networks today well. IPTV can utilize network resources effectively to achieve the substantial interaction between media providers and media consumers.

IPTV provides rich enhanced services. Media content recommendation is a typical enhanced service. A user can obtain media content recommended by a network by subscribing to the media content recommendation service. In the prior art, the user selects desired recommended content from the Electronic Program Guide (EPG) provided by the network to obtain the media content recommendation information.

When implementing the present invention, the inventor discovers at least the following problem in the prior art: the user can obtain media content recommendation information only by selecting the EPG menus; the single method for obtaining recommended media content does not meet the flexible service recommendation requirements of the IPTV system.

### Summary of the Invention

Embodiments of the present invention provide a method, an apparatus, and a system for recommending media content to provide various forms of media content recommendation.

For the purposes, the following technical solution is provided:

A method for recommending media content includes: detecting media content recommendation trigger events; generating media content recommendation information according to a preset media content recommendation policy when a media content recommendation trigger event is detected; and sending the generated media content recommendation information to a user terminal.

An apparatus for recommending media content includes:
a trigger event detecting unit, configured to detect media content recommendation trigger events;
a media content recommendation information generating unit, configured to generate media content recommendation information according to a preset media content recommendation policy when the trigger event detecting unit detects a media content recommendation trigger event; and
a media content recommendation information sending unit, configured to send the media content recommendation information generated by the media content recommendation information generating unit to a user terminal.

A system for recommending media content includes:
a media content recommending apparatus, configured to generate media content recommendation information according to a preset media content recommendation policy when detecting a media content recommendation trigger event and send the media content recommendation information; and
a user terminal, configured to receive and display the media content recommendation information sent by the media content recommending apparatus.

When a media content recommendation trigger event is detected, the method, apparatus and system for recommending media content, which are provided in the embodiments of the present invention, can generate media content recommendation information according to a preset media content recommendation policy that includes multiple forms so that the generation of media content recommendation information is various. This solves the following problem in the prior art: Media content recommendation information is sent to the user only according to service selection information, which causes the form of media content recommendation is single. Therefore, the flexible service recommendation requirements of IPTV cannot be satisfied. The method, apparatus and system for recommending media content, which are provided in the embodiments of the present invention, recommend media content in more forms so as to satisfy the flexible media content recommendation service requirements of IPTV.

### Brief Description of the Drawings

FIG. 1 is a flowchart of the method for recommending media content provided in an embodiment of the present invention;
FIG. 2 is another flowchart of the method for recommending media content provided in an embodiment of the present invention;
FIG. 3 is a schematic diagram of the media content recommending apparatus provided in an embodiment of the present invention;
FIG. 4 is another schematic diagram of the media content recommending apparatus provided in an embodiment of the present invention;
FIG. 5 is a schematic diagram of the media content recommending system provided in an embodiment of the present invention;
FIG. 6 is a sequence diagram of the method, apparatus, and system for recommending media content provided in a first embodiment of the present invention;
FIG. 7 is a sequence diagram of the method, apparatus, and system for recommending media content provided in a second embodiment of the present invention;
FIG. 8 is a sequence diagram of the method, apparatus, and system for recommending media content provided in a third embodiment of the present invention;
FIG. 9 is a sequence diagram of the method, apparatus, and system provided for recommending media content in a fourth embodiment of the present invention;
FIG. 10 is a sequence diagram of the method, apparatus, and system for recommending media content provided in a fifth embodiment of the present invention;
FIG. 11 is a sequence diagram of the method, apparatus, and system for recommending media content provided in a sixth embodiment of the present invention;
FIG. 12 is a sequence diagram of the method, apparatus, and system provided for recommending media content in a seventh embodiment of the present invention;
FIG. 13 is a sequence diagram of the method, apparatus, and system for recommending media content provided in an eighth embodiment of the present invention; and
FIG. 14 is a sequence diagram of the method, apparatus, and system for recommending media content provided in a ninth embodiment of the present invention.

### Detailed Description of the Embodiments

To solve the single form of media content recommendation that is available through selection of EPG menus in the prior art, the embodiments of the present invention provide a method, apparatus, and system for recommending media content.

The media content may be IPTV media content. In practice, the media content may be other types of media content, which are not described in the embodiments of the present invention.

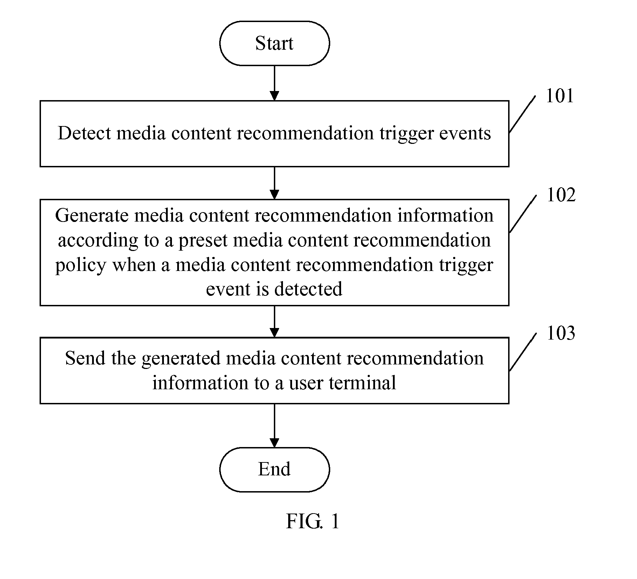

As shown in FIG. 1, a method for recommending media content, which is provided in an embodiment of the present invention, includes the following steps:
Step 101: Detect media content recommendation trigger events.
Step 101 may detect all possible media content recommendation trigger events. In the embodiment, all possible media content recommendation trigger events include: media content trigger events requested or subscribed to by the user, new program online events, and media content trigger events related to the currently played program, video scene, video frame, or video object. In practice, however, the trigger events are not limited to the preceding events.
Step 101 may also detect media content recommendation trigger events according to a certain condition. In this case, step 101 may detect media content recommendation trigger events by using the following two methods:

One method includes: obtaining a media content recommendation information request from a user terminal and detecting media content recommendation trigger events according to the media content recommendation information request.

In the embodiment of the present invention, the media content recommendation information request may include one or more items of media content type, media content description feature, media content identifier, and media content deviation. In an IP Multimedia Subsystem (IMS) based IPTV system, the media content recommendation information request may be transmitted through a Session Initiation Protocol message (SIP MESSAGE or INFO), the Hypertext Transfer Protocol (HTTP), or the Simple Object Access Protocol (SOAP).

The other method includes detecting media content recommendation trigger events according to a preset detection policy.

In the embodiment, the detection policy may be set by the user terminal or the network. When the detection policy is set by the user terminal, the setting procedure includes: receiving from the user terminal a media content recommendation information subscription that includes one or more items of media content type, media content description feature, media content identifier, and media content deviation and that may be transmitted through SIP MESSAGE, SIP INFO, HTTP or SOAP, where the media content recommendation information subscription may be implemented through an implicit subscription during an IPTV attach procedure or session procedure of the user terminal when the IPTV system is an IMS based IPTV system; and setting the detection policy according to the media content recommendation information subscription when the subscription of the user terminal is successful.

Step 102: Generate media content recommendation information according to a preset media content recommendation policy when a media content recommendation trigger event is detected.

In the embodiment, the preset media content recommendation policy may be a general media content recommendation policy, a personalized media content recommendation policy, or a program-related media content recommendation policy. The general media content recommendation policy means that media content recommendation information is generated and sent to all user terminals when the media content recommendation trigger event such as a new program online event is detected. The personalized media content recommendation policy means that media content recommendation information is generated and sent to the appropriate user terminals when a media content recommendation trigger event that matches the personalized setting of users is detected. For example, when it is detected that an animation program is online, the media content recommendation information of the animation program is generated according to the personalized media content recommendation policy and sent to user that love animation programs. The program-related media content recommendation policy means that media content recommendation information is generated when a media content recommendation trigger event related to a Live TV (LTV) or Content On Demand (COD) program that is being played to the user is detected. In the embodiment, media content recommendation trigger events related to an LTV or COD program that is being played to the user may include media content recommendation trigger events related to the program that is being played to the user, or the video scene, video shot, video frame or video object in the program.

In the embodiment, the media content recommendation information may include the media content identifier, media content description feature, access control information of media content, or control logic information of media content (such as the logic controlling presence of the media content recommendation information on the user terminal). In practice, the media content recommendation information may include other information that is not described herein.

Step 103: Send the generated media content recommendation information to the user terminal.

Specifically, the step includes: obtaining state information of the user terminal; sending the generated media content recommendation information to the user terminal when the user terminal is online; or sending the generated media content recommendation information to a preset user terminal associated with the user terminal when the user terminal is offline.

In step 103, the media content recommendation information may be sent to the user terminal in two ways. One way is through a signaling path. For example, when the method for recommending media content, which is provided in the embodiment of the present invention, is applied to an IMS base IPTV system, the media content recommendation information may be transmitted over a SIP Gm interface. In particular, the media content recommendation information may be transmitted through SIP MESSAGE or SIP INFO. Or, the media content recommendation information may be transmitted over the HTTP Ut interface, SOAP, Real-Time Streaming Protocol (RTSP), or a private protocol. The other way is through a media path. For example, the media content recommendation information may be transmitted through an independent Real Time Transport Protocol (RTP) or encapsulated in a Moving Picture Expert Group Transport Stream (MPEG 2-TS).

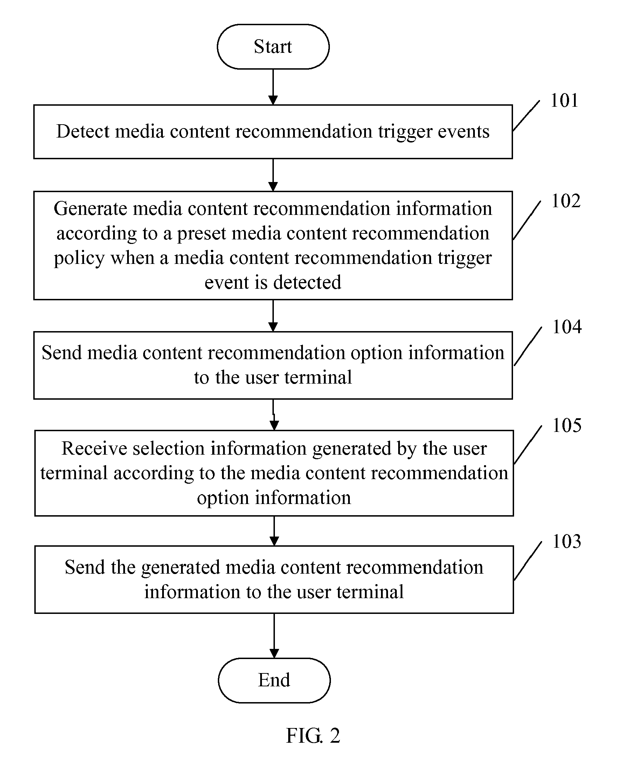

If the media content recommendation information generated in step 102 includes media content recommendation option information, to help the user obtain the required media content recommendation information, as shown in FIG. 2, the method for recommending media content, which is provided in the embodiment of the present invention, further includes the following steps after step 102 and before step 103:

Step 104: Send media content recommendation option information to the user terminal. In the embodiment, the media content recommendation option information is the recommendation clue or recommendation keyword of the media content. The user may select media content recommendation information that the user likes or requires according to the media content recommendation option information.

Step 105: Receive the selection information generated by the user terminal according to the media content recommendation option information.

Then, step 103 may send the generated media content recommendation information to the user terminal according to the received selection information.

Further, the method for recommending media content, which is provided in the embodiment of the present invention, may include a step of obtaining the media content recommendation service state information of the user terminal before step 101. Then, step 101 may determine whether the user terminal has activated the media content recommendation service according to the media content recommendation service state information of the user terminal and if the media content recommendation service of the user terminal is active, and detect media content recommendation trigger events.

When a media content recommendation trigger event is detected, the method for recommending media content, which is provided in the embodiment of the present invention, generates media content recommendation information according to a preset media content recommendation policy that includes multiple forms so that the generation of media content recommendation information is various. This solves the following problem in the prior art: Media content recommendation information is sent to the user only according to the user's selection, which causes the form of media content recommendation is single. Therefore, the flexible service recommendation requirements of IPTV cannot be satisfied. In the prior art, the user must obtain recommended media content from the network by selection of an EPG menus, which makes the user operation be complex. In the embodiment of the present invention, however, the media content recommendation information is generated according to the preset media content recommendation policy. The forms of media content recommendation are therefore more diversified and the user can obtain recommended media content more easily. Therefore, the method provided in the embodiment of the present invention satisfies the flexible service recommendation requirements of IPTV.

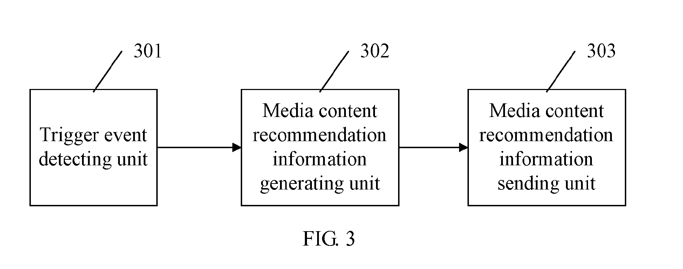

As shown in FIG. 3, a media content recommending apparatus provided in an embodiment of the present invention includes a trigger event detecting unit 301, a media content recommendation information generating unit 302, and a media content recommendation information sending unit 303.

The trigger event detecting unit 301 is configured to detect media content recommendation trigger events.

In the embodiment, the media content recommendation trigger event may include one or more types of media content trigger event requested or subscribed to by the user, new program online event, or media content trigger event related to the currently played program, video scene, video frame, or video object.

The media content recommendation information generating unit 302 is configured to generate media content recommendation information according to a preset media content recommendation policy when the trigger event detecting unit 301 detects a media content recommendation trigger event.

The preset media content recommendation policy may be a general media content recommendation policy, a personalized media content recommendation policy, or a program-related media content recommendation policy. The details are provided in step 102 shown in FIG. 1 and therefore are not described here.

The media content recommendation information sending unit 303 is configured to send the media content recommendation information generated by the media content recommendation information generating unit 302 to the user terminal.

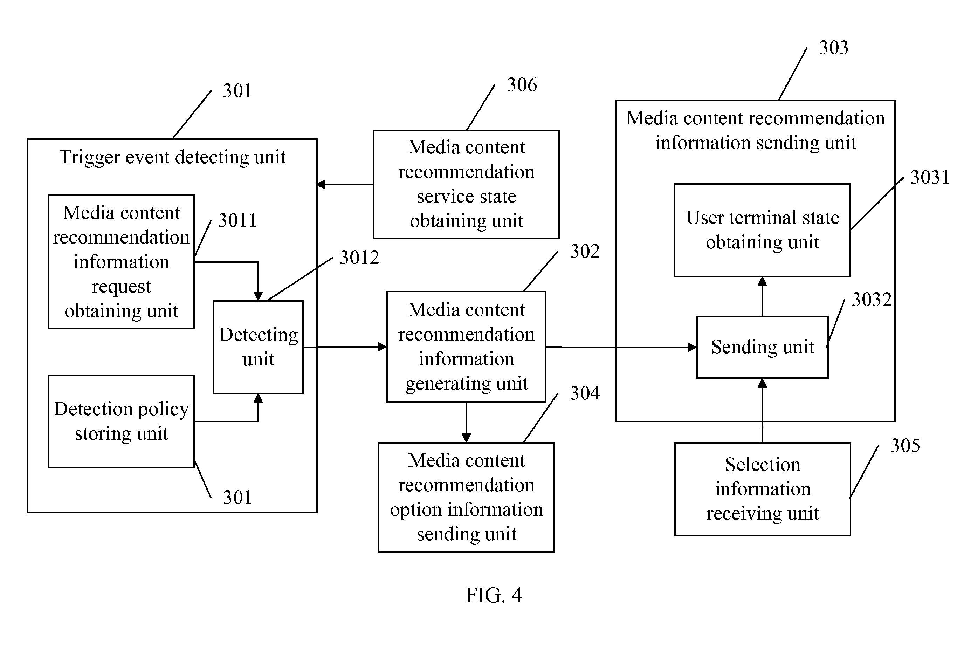

Further, as shown in FIG. 4, the trigger event detecting unit 301 may include:
a media content recommendation information request obtaining unit 3011, configured to obtain the media content recommendation information request sent by the user terminal; and
a detecting unit 3012, configured to detect media content recommendation trigger events according to the media content recommendation information request obtained by the media content recommendation information request obtaining unit 3011.

Further, as shown in FIG. 4, the trigger event detecting unit 301 may include:
a detection policy storing unit 3013, configured to store the detection policy.

The detecting unit 3012 is further configured to detect media content recommendation trigger events according to the detection policy stored by the detection policy storing unit 3013.

Further, as shown in FIG. 4, the media content recommending apparatus provided in the embodiment of the present invention may include:
a media content recommendation option information sending unit 304, configured to send the media content recommendation option information to the user terminal when the media content recommendation information generated by the media content recommendation information generating unit 302 includes the media content recommendation option information; and
a selection information receiving unit 305, configured to receive the selection information generated by the user terminal according to the media content recommendation option information.

The media content recommendation information sending unit 302 is further configured to send the media content recommendation information generated by the media content recommendation information generating unit 302 to the user terminal according to the selection information received by the selection information receiving unit 305.

Further, as shown in FIG. 4, the media content recommendation information sending unit 303 may include:
a user terminal state obtaining unit 3031, configured to obtain state information of the user terminal; and
a sending unit 3032, configured to send the media content recommendation information generated by the media content recommendation information generating unit to the user terminal when the user terminal state obtained by the user terminal state obtaining unit is online, or send the media content recommendation information generated by the media content recommendation information generating unit to a preset user terminal associated with the user terminal when the user terminal state obtained by the user terminal state obtaining unit 3031 is offline.

Further, as shown in FIG. 4, the media content recommending apparatus provided in the embodiment of the present invention may include:
a media content recommendation service state obtaining unit 306, configured to obtain the media content recommendation service state of the user terminal.

The trigger event detecting unit 301 is further configured to detect media content recommendation trigger events when the media content recommendation service state of the user terminal obtained by the media content recommendation service state obtaining unit 306 is active.

The media content recommending apparatus provided in the embodiment of the present invention may be located in an IPTV application server (IPTV AS), an independent recommendation server, an IPTV media function network element, or an IMS core network element.

When a media content recommendation trigger event is detected, the media content recommending apparatus provided in the embodiment of the present invention generates media content recommendation information according to a preset media content recommendation policy that includes multiple forms so that the generation of media content recommendation information is various. This solves the following problem in the prior art: Media content recommendation information is sent to the user only according to the service selection information, which causes the form of media content recommendation is single. Therefore, the flexible service recommendation requirements of IPTV cannot be satisfied. The media content recommending apparatus provided in the embodiment of the present invention recommends media content in more forms so as to satisfy the flexible media content recommendation service requirements of IPTV.

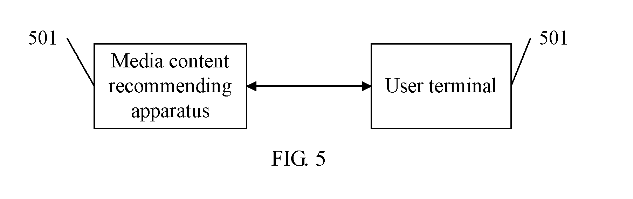

As shown in FIG. 5, a system for recommending media content, which is provided in an embodiment of the present invention, includes:
a media content recommending apparatus 501, configured to generate media content recommendation information according to a preset media content recommendation policy when a media content recommendation trigger event is detected and send the media content recommendation information; and
a user terminal 502, configured to receive and display the media content recommendation information sent by the media content recommending apparatus 501.

Further, the media content recommending apparatus 501 sends the media content recommendation information to the user terminal 502 through a signaling path or a media path.

When a media content recommendation trigger event is detected, the system for recommending media content, which is provided in the embodiment of the present invention, generates media content recommendation information according to a preset media content recommendation policy that includes multiple forms so that the generation of media content recommendation information is various. This solves the following problem in the prior art: Media content recommendation information is sent to the user only according to the service selection information, which causes the form of media content recommendation is single. Therefore, the flexible service recommendation requirements of IPTV cannot be satisfied. The system for recommending media content, which is provided in the embodiment of the present invention, recommends media content in more forms so as to satisfy the flexible media content recommendation service requirements of IPTV.

To better explain the technical solution of the present invention, some exemplary embodiments of the present invention are described. The user terminals described in the following embodiments are all IPTV terminals.

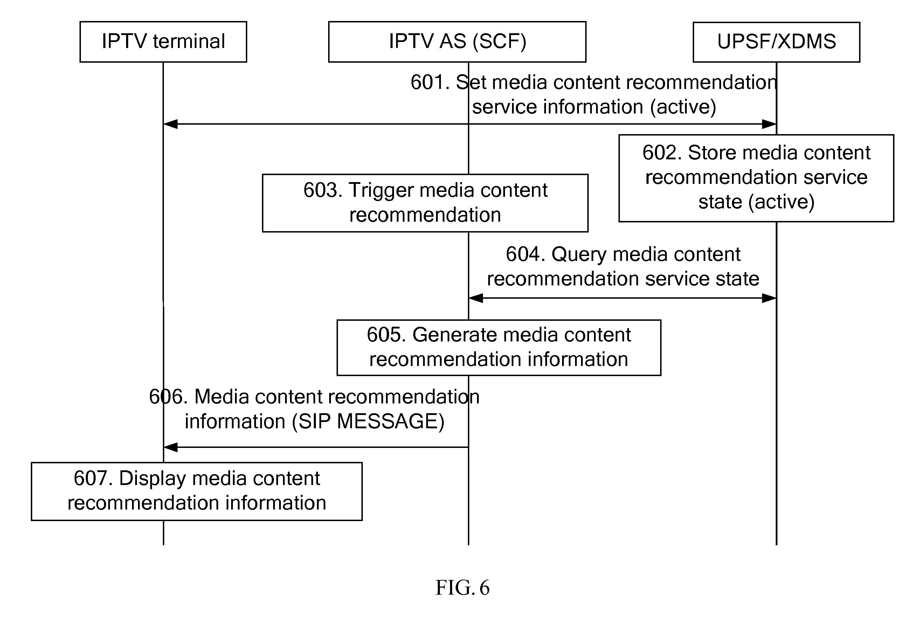

In the first embodiment, an IPTV terminal has subscribed to the media content recommendation service; the media content recommending apparatus detects media content recommendation trigger events according to the detection policy set by the network, generates media content recommendation information, and sends the media content recommendation information to the IPTV terminal; and the IPTV terminal receives the content notification and displays the content recommendation information; the media content recommending apparatus is located in an IPTV AS. As shown in FIG. 6, the method for recommending media content includes the following steps:
Step 601: The IPTV terminal sets its media content recommendation service state through a configuration interface to activate the media content recommendation service.
Step 602: A User Profile Service Function (UPSF) or an XML Document Management Server (XDMS) stores the media content recommendation service state of the IPTV terminal.
Step 603: The IPTV AS detects media content recommendation trigger events according to the preset detection policy and triggers media content recommendation, where the detection policy includes detection of media content recommendation events related or unrelated to the currently played program.
Step 604: The IPTV AS queries the media content recommendation service state of the IPTV terminal.
Step 605: When the media content recommendation state of the IPTV terminal is active, the IPTV AS generates media content recommendation information.
Step 606: The IPTV AS sends the media content recommendation information to the IPTV terminal.
Step 607: The IPTV terminal displays the media content recommendation information.

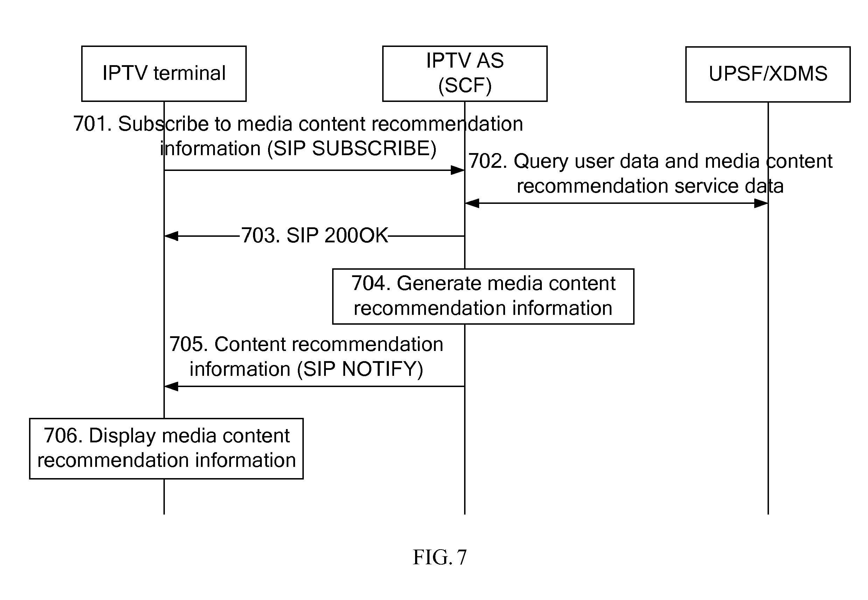

In the second embodiment, an IPTV terminal has subscribed to the media content recommendation service; the media content recommending apparatus detects media content recommendation trigger events according to the detection policy set by the user, generates media content recommendation information, and sends the media content recommendation information to the IPTV terminal; the IPTV terminal receives the content notification and displays the content recommendation information; the media content recommending apparatus is located in an IPTV AS. As shown in FIG. 7, the method for recommending media content includes the following steps:
Step 701: The IPTV terminal sends a media content recommendation subscription message to the IPTV AS that provides the recommendation service. The message uses the SIP SUBSCRIBE event subscription mechanism.
Step 702: The IPTV AS queries the content recommendation service information of the user and detects the service rights.
Step 703: When the user subscribes to the media content recommendation service, the IPTV AS sends a subscription response SIP 200 OK to the IPTV terminal.
Step 704: The IPTV AS generates media content recommendation information according to the media content recommendation subscription message sent by the IPTV terminal in step 701.
Step 705: The IPTV AS sends a media content recommendation message to the IPTV terminal. The media content recommendation information is carried in a SIP NOTIFY message.
Step 706: The IPTV terminal receives the media content recommendation message and displays the media content recommendation information.

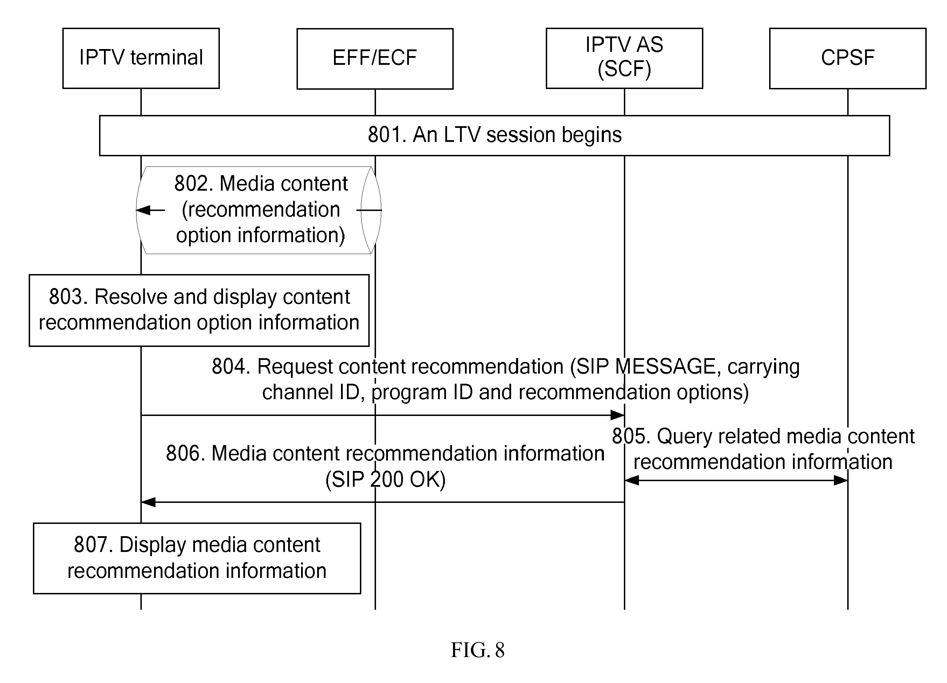

In the third embodiment, a media content recommending apparatus detects media content recommendation trigger events related to the currently played LTV program according to a detection policy preset by the network. When the media content recommending apparatus recommends media content to an IPTV terminal, the media content recommending apparatus sends media content recommendation options (content recommendation keywords) related to the current LTV program and displays the content recommendation options on the IPTV terminal. The user may select a keyword option and the media content recommending apparatus recommends media content to the IPTV terminal according to the user's selection after receiving the response from the IPTV terminal. The media content recommending apparatus is located in an IPTV AS. As shown in FIG. 8, the method for recommending media content includes the following steps:
Step 801: An LTV session begins.
Step 802: The IPTV terminal receives a multicast media stream that carries the media content recommendation option information.
Step 803: The IPTV terminal resolves the media content recommendation option information from the multicast media stream and displays the media content recommendation options to the user.
Step 804: The user selects a desired content recommendation option and the IPTV terminal sends a content recommendation request message to the IPTV AS that provides the media content recommendation service. The message may carry the channel ID, program ID, or recommendation option information and may be transmitted through a SIP MESSAGE/INFO.
Step 805: The IPTV AS obtains the corresponding media content recommendation information from a Content Profile Service Function (CPSF).
Step 806: The IPTV AS sends the media content recommendation information to the IPTV terminal. The media content recommendation information is transmitted through a SIP 200 OK (MESSAGE/INFO).
Step 807: The IPTV terminal displays the media content recommendation information.

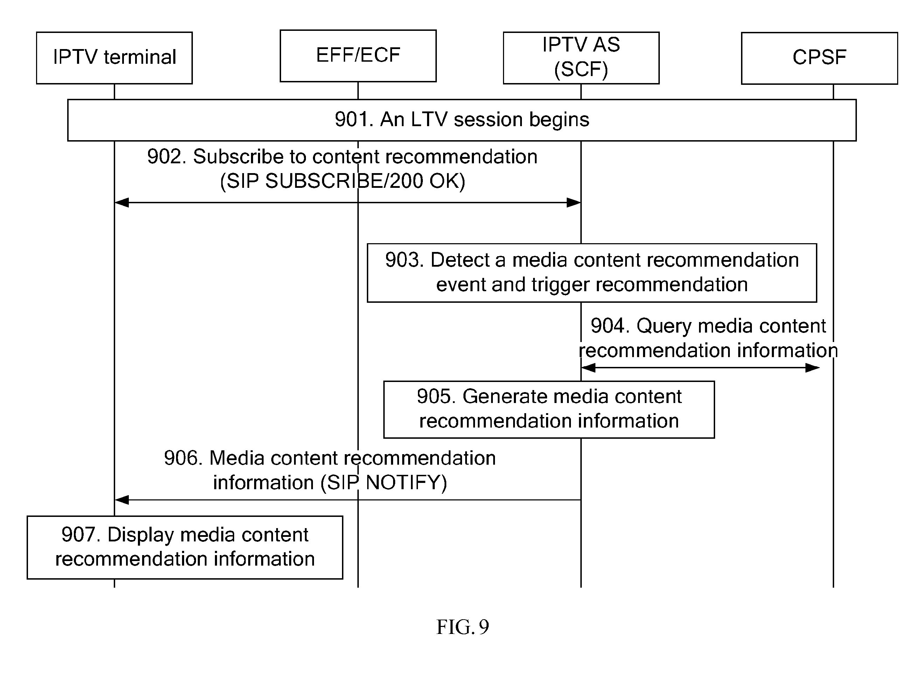

In the fourth embodiment, a media content recommending apparatus detects media content recommendation trigger events related to the currently played LTV program according to a detection policy set by the user, generates media content recommendation information, and sends the media content recommendation information to an IPTV terminal; the IPTV terminal receives the content notification and displays the content recommendation information. The media content recommending apparatus is located in an IPTV AS. As shown in FIG. 9, the method for recommending media content includes the following steps:
Step 901: An LTV session begins.
Step 902: The IPTV terminal subscribes to media content recommendation from the IPTV AS that provides the content recommendation service through a SIP SUBSCRIBE message. The IPTV AS stores the media content recommendation subscription event of the IPTV terminal and sends a subscription response SIP 200 OK to the IPTV terminal.
Step 903: The IPTV AS detects a media content recommendation trigger event according to the media content recommendation subscription event stored in step 902 and triggers media content recommendation.
Step 904: The IPTV AS obtains the corresponding media content recommendation information from a CPSF.
Step 905: The IPTV AS generates media content recommendation information according to the preset media content recommendation policy.
Step 906: The IPTV AS sends the media content recommendation information to the IPTV terminal. The media content recommendation information is transmitted through a SIP 200 OK (NOTIFY).
Step 907: The IPTV terminal displays the media content recommendation information.

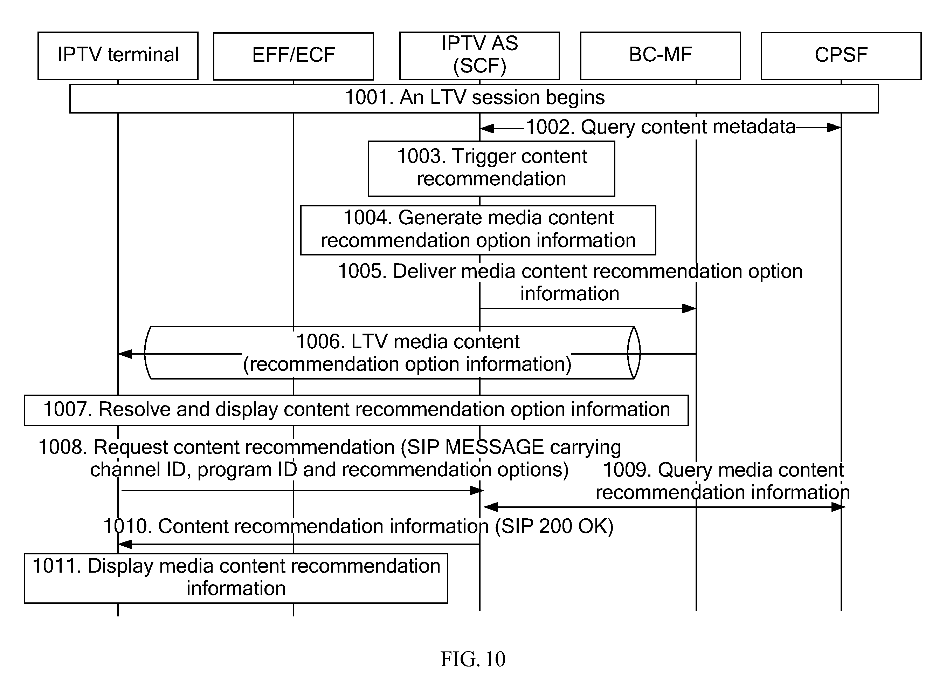

In the fifth embodiment, the media content recommending apparatus detects media content recommendation trigger events related to the currently played LTV program according to a detection policy set by the user, generates media content recommendation information, and sends the media content recommendation information to an IPTV terminal; the IPTV terminal receives the content notification and displays the content recommendation information. The trigger event detecting unit of the media content recommending apparatus is located in a Broadcast-Media Function (BC-MF) entity and the media content recommendation information generating unit and media content recommendation information sending unit of the media content recommending apparatus are located in an IPTV AS. As shown in FIG. 10, the method for recommending media content includes the following steps:
Step 1001: An LTV session begins.
Step 102: The IPTV AS queries a CPSF for metadata of the LTV program.
Step 103: The IPTV AS triggers media content recommendation related to the currently played content in the LTV service process.
Step 1004: The IPTV AS generates media content recommendation option information.
Step 1005: The IPTV AS sends a service recommendation option information delivery indication to the BC-MF. The indication message carries the media content recommendation service option information.
Step 1006: When receiving the indication, the BC-MF sends program-related media content recommendation option information to the IPTV terminal through a multicast media path. The program-related media content recommendation option information is transmitted as an independent RTP stream or encapsulated in a video stream, such as an MPEG-2 TS media stream.
Step 1007 to step 1011 are the same as step 902 to step 907 in the fourth embodiment and therefore are not described here.

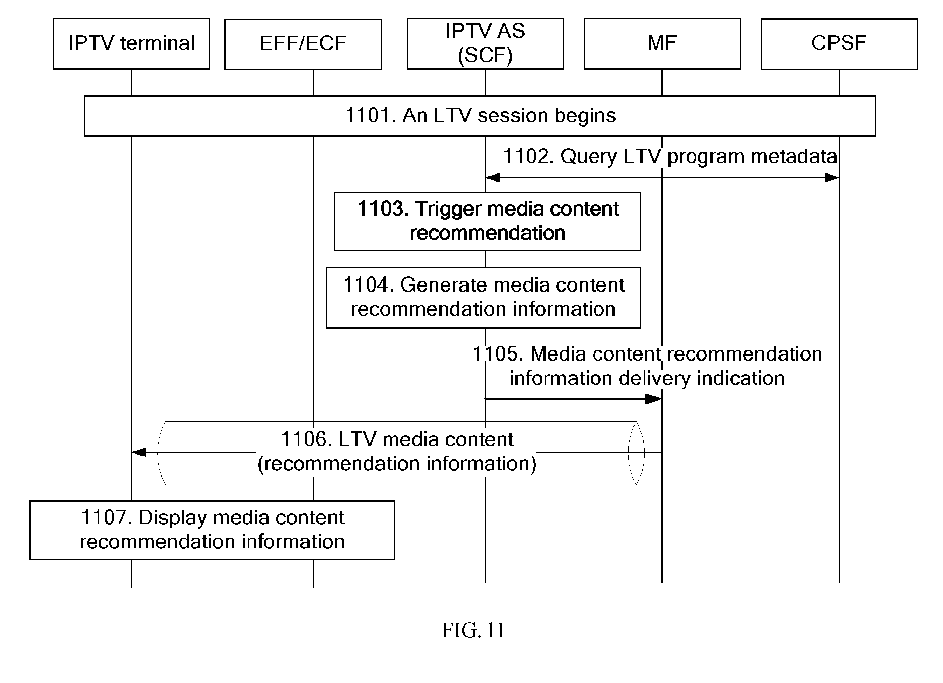

In the sixth embodiment, the media content recommending apparatus detects media content recommendation trigger events related to the currently played LTV program according to a detection policy set by the user, generates media content recommendation information, and sends the media content recommendation information to an IPTV terminal; the IPTV terminal receives the content notification and displays the content recommendation information. The media content recommending apparatus is located in an IPTV AS. The BC-MF sends media content recommendation information to the IPTV terminal As shown in FIG. 11, the method for recommending media content includes the following steps:
Step 1101: An LTV session begins.
Step 1102: The IPTV AS queries a CPSF for metadata of the LTV program.
Step 1103: The IPTV AS detects media content recommendation trigger events related to the currently played content according to the preset detection policy and triggers media content recommendation in the LTV service process.
Step 1104: The IPTV AS generates media content recommendation information.
Step 1105: The IPTV AS sends a service recommendation information delivery indication to the BC-MF. The indication message carries the media content recommendation service information.
Step 1106: When receiving the indication, the BC-MF sends program-related media content recommendation information to the IPTV terminal through a multicast media path. The program-related media content recommendation information is transmitted as an independent RTP stream or encapsulated in a video stream, such as an MPEG-2 TS media stream.
Step 1107: The IPTV terminal displays the media content recommendation information.

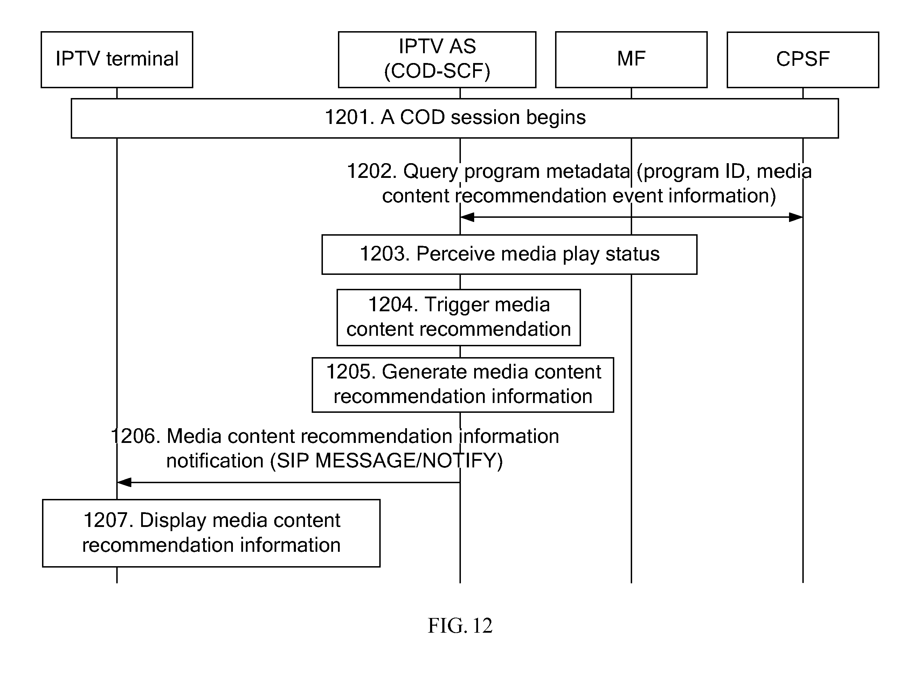

In the seventh embodiment, the media content recommending apparatus detects media content recommendation trigger events related to the currently played COD program according to a detection policy set by the user, generates media content recommendation information, and sends the media content recommendation information to an IPTV terminal; the IPTV terminal receives the content notification and displays the content recommendation information. The media content recommending apparatus is located in an IPTV AS. As shown in FIG. 12, the method for recommending media content includes the following steps:
Step 1201: A COD session begins.
Step 1202: The IPTV AS queries the CPSF for metadata of the COD program. The metadata includes media content related trigger event information that includes the trigger occasion and the related recommended media content. The trigger occasion is the entire program or a specific video scene, video shot, video frame, or video object of the program.
Step 1023: The IPTV AS perceives the media play status and detects trigger events according to the preset detection policy.
Step 1204: The IPTV AS detects a trigger event and starts media content recommendation.
Step 1205: The IPTV AS generates media content recommendation information or media content recommendation option information.
Step 1206: The IPTV AS sends the media content recommendation information to the IPTV terminal. The media content recommendation information may be carried in a SIP MESSAGE/INFO/NOTIFY.
Step 1207: The IPTV terminal displays the media content recommendation information.

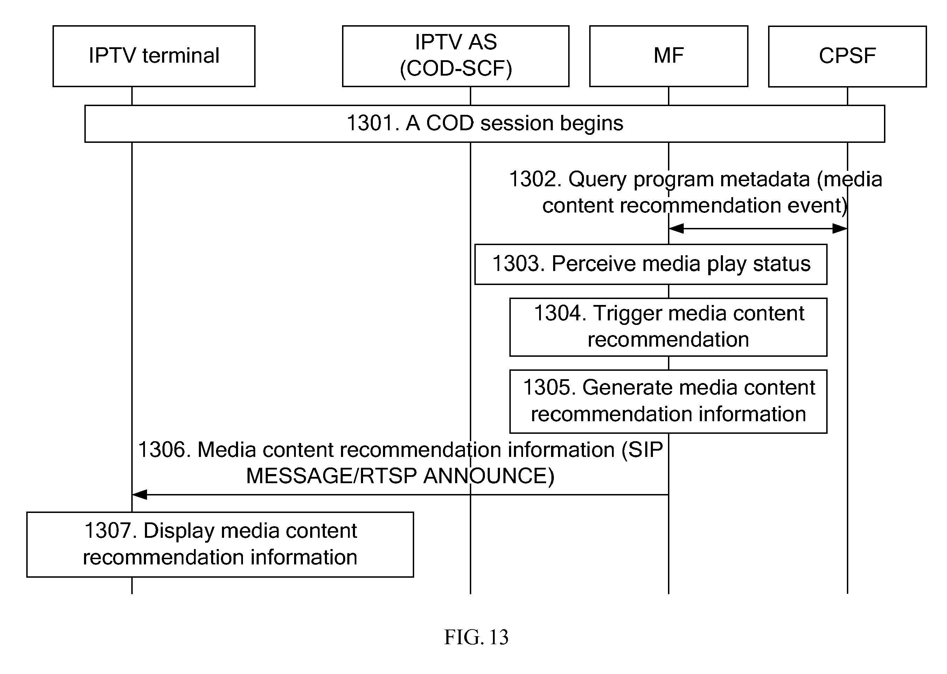

In the eighth embodiment, the media content recommending apparatus detects media content recommendation trigger events related to the currently played COD program according to a detection policy set by the user, generates media content recommendation information, and sends the media content recommendation information to an IPTV terminal; the IPTV terminal receives the content notification and displays the content recommendation information. The media content recommending apparatus is located in an IPTV MF. As shown in FIG. 13, the method for recommending media content includes the following steps:
Step 1301: A COD session begins.
Step 1302: The IPTV MF queries the CPSF for metadata of the COD program. The metadata includes media content related trigger event information that includes the trigger occasion and the related recommended content. The trigger occasion is the entire program or a specific video scene, video shot, video frame, or video object of the program.
Step 1303: The IPTV MF perceives the media play status and detects trigger events according to the preset detection policy.
Step 1304: The IPTV MF detects a trigger event and starts media content recommendation.
Step 1305: The IPTV MF generates media content recommendation information or media content recommendation option information.
Step 1306: The IPTV MF sends the media content recommendation information to the IPTV terminal through a SIP MESSAGE/INFO or RTSP message such as RTSP Announce.
Step 1307: The IPTV terminal displays the media content recommendation information.

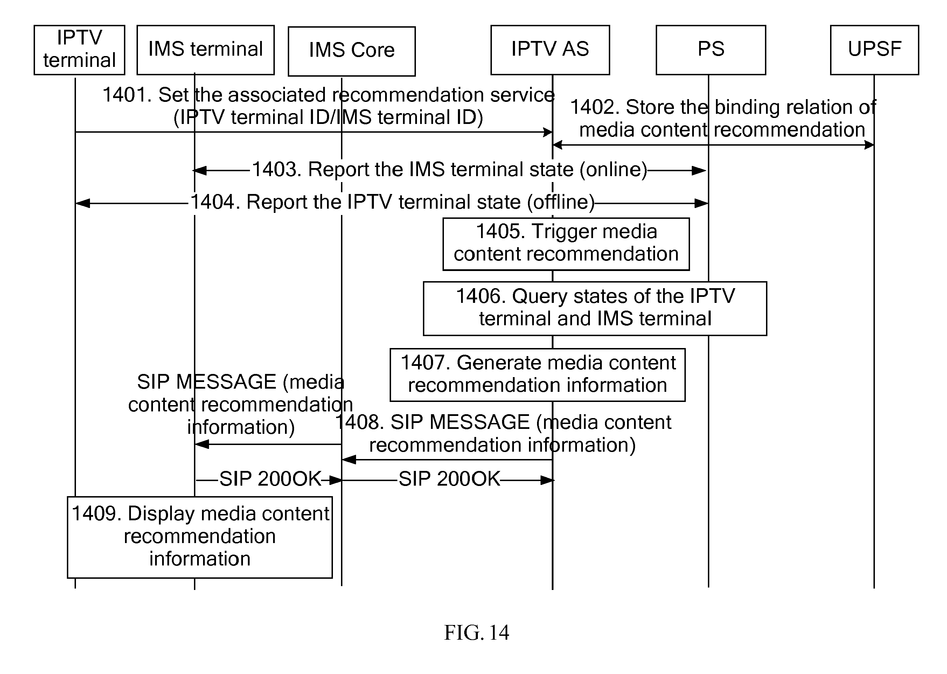

In the ninth embodiment, the media content recommending apparatus detects media content recommendation trigger events according to the preset detection policy and generates media content recommendation information. If the IPTV terminal is offline, the media content recommending apparatus sends the generated media content recommendation information to a user terminal associated with the IPTV terminal. In the embodiment, the associated user terminal is an IMS terminal and the media content recommending apparatus is located in an IPTV AS. As shown in FIG. 14, the method for recommending media content includes the following steps:
Step 1401: The user sets the identifier of the IMS terminal associated with the media content recommendation service, such as an IMS Public User Identity (IMPU).
Step 1402: When receiving the parameter setting request of the media content recommendation service, the IPTV AS stores the IMS terminal identifier associated with the media content recommendation service to a UPSF or an XDMS.
Step 1403: The IMS terminal reports the user terminal state to a Presence Server (PS) that the IMS terminal is online.
Step 1404: The IPTV terminal reports the user terminal state to the PS that the IPTV terminal is offline.
Step 1405: The IPTV AS detects a media content recommendation event according to the preset detection policy and starts media content recommendation.
Step 1406: The IPTV AS queries the state of the IPTV terminal and the state of the IMS terminal associated with the IPTV terminal.
Step 1405: The IPTV AS detects that the IPTV terminal is offline and the associated IMS terminal is online and generates media content recommendation information.
Step 1408: The IPTV AS sends the media content recommendation information to the IMS terminal through a SIP MESSAGE.
Step 1409: The IMS terminal receives the SIP MESSAGE that carries the media content recommendation information and displays the media content recommendation information.

When a media content recommendation trigger event is detected, the media content recommending method, apparatus and system provided in the embodiments of the present invention can generate media content recommendation information according to a preset media content recommendation policy that includes multiple forms so that the generation of media content recommendation information is various. This solves the following problem in the prior art: Media content recommendation information is sent to the user only according to the user's selection, which causes the form of media content recommendation is single. Therefore, the flexible service recommendation requirements of IPTV cannot be satisfied. In the prior art, the user must obtain recommended media content from the network through selection of EPG menus so that the user operation is complex. In the embodiments of the present invention, however, the media content recommendation information is generated according to the preset media content recommendation policy. The forms of media content recommendation are therefore more diversified and the user can obtain recommended media content more easily. Therefore, the method, apparatus, and system provided in the embodiments of the present invention satisfy the flexible service recommendation requirements of IPTV.

The method, apparatus and system for recommending media content, which are provided in the embodiments of the present invention, are applicable to IPTV networks to provide the media content recommendation service to IPTV terminals.

Person having ordinary skill in the art may understand that all or part of the steps of the method according to the embodiments of the present invention may be implemented by a program instructing relevant hardware. The program may be stored in a computer readable storage medium, such as a Read-Only Memory (ROM), a Random Access Memory (RAM), a magnetic disk or a Compact Disk Read-Only Memory (CD-ROM).

The preceding descriptions are merely exemplary embodiments of the present invention, but not intended to limit the scope of the present invention. Any modification, equivalent replacement, or improvement made without departing from the spirit and principle of the present invention should fall within the scope of the present invention. Therefore, the protection scope of the present invention is subject to the appended claims.

## Claims

1. A method for recommending media content, comprising:
detecting media content recommendation trigger events;
generating media content recommendation information according to a preset media content recommendation policy when a media content recommendation trigger event is detected; and
sending the generated media content recommendation information to a user terminal.

2. The method of claim 1, wherein detecting media content recommendation trigger events comprises:
obtaining a media content recommendation information request sent by the user terminal; and
detecting media content recommendation trigger events according to the media content recommendation information request.

3. The method of claim 1, wherein detecting media content recommendation trigger events comprises: detecting media content recommendation trigger events according to a preset detection policy.

4. The method of claim 3, wherein the detection policy is set by the user terminal or network.

5. The method of claim 4, wherein when the detection policy is set by the user terminal, the step of setting the detection policy comprises:
receiving a request for subscribing to a media content recommendation information sent by the user terminal; and
setting the detection policy according to the media content recommendation information subscription.

6. The method of claim 2 or 5, wherein the media content recommendation information request or media content recommendation subscription comprises one or more of the following items:
media content type, media content description feature, media content identifier, and media content deviation.

7. The method of claim 1, wherein the media content recommendation trigger events comprise one or more of the following events:
media content trigger event requested or subscribed to by a user, new program online event, and media content trigger event related to a currently played program, video scene, video frame, or video object.

8. The method of claim 1, after generating the media content recommendation information according to the preset media content recommendation policy when the media content recommendation information comprises media content recommendation option information, further comprising:
sending the media content recommendation option information to the user terminal; receiving selection information generated by the user terminal according to the media content recommendation option information;
wherein the sending the generated media content recommendation information to the user terminal comprises:
sending the generated media content recommendation information to the user terminal according to the received selection information.

9. The method of claim 1, wherein the media content recommendation policy comprises one or more of the following policies:
general media content recommendation policy, personalized media content recommendation policy, and program-related media content recommendation policy.

10. The method of claim 1, wherein the media content recommendation information comprises one or more of the following items:
media content identifier, media content description feature, access control information of media content, and control logic information of the media content.

11. The method of claim 1, wherein sending the generated media content recommendation information to the user terminal comprises:
obtaining state information of the user terminal;
sending the generated media content recommendation information to the user terminal when the user terminal is online; or
sending the generated media content recommendation information to a preset user terminal associated with the user terminal when the user terminal is offline.

12. The method of claim 1, wherein sending the generated media content recommendation information to the user terminal comprises: sending the generated media content recommendation information to the user terminal through a signaling path or a media path.

13. The method of claim 1, wherein:
before detecting media content recommendation trigger events, the method further comprises:
obtaining media content recommendation service state information of the user terminal; and
detecting media content recommendation trigger events comprises:
detecting media content recommendation trigger events when the media content recommendation service of the user terminal is active.

14. An apparatus for recommending media content, comprising:
a trigger event detecting unit, configured to detect media content recommendation trigger events;
a media content recommendation information generating unit, configured to generate media content recommendation information according to a preset media content recommendation policy when the trigger event detecting unit detects a media content recommendation trigger event; and
a media content recommendation information sending unit, configured to send the media content recommendation information generated by the media content recommendation information generating unit to a user terminal.

15. The apparatus of claim 14, wherein the trigger event detecting unit comprises:
a media content recommendation information request obtaining unit, configured to obtain a media content recommendation information request sent by the user terminal; and
a detecting unit, configured to detect media content recommendation trigger events according to the media content recommendation information request obtained by the media content recommendation information request obtaining unit.

16. The apparatus of claim 14, wherein the trigger event detecting unit comprises:
a detection policy storing unit, configured to store a detection policy; and
a detecting unit, configured to detect media content recommendation trigger events according to the detection policy stored by the detection policy storing unit.

17. The apparatus of claim 14, further comprising a media content recommendation option information sending unit and a selection information receiving unit, wherein:
the media content recommendation option information sending unit is configured to send media content recommendation option information to the user terminal when the media content recommendation information generated by the media content recommendation information generating unit comprises the media content recommendation option information;
the selection information receiving unit is configured to receive selection information generated by the user terminal according to the media content recommendation option information; and
the media content recommendation information sending unit is further configured to send the media content recommendation information generated by the media content recommendation information generating unit to the user terminal according to the selection information received by the selection information receiving unit.

18. The apparatus of claim 14, wherein the media content recommendation information sending unit comprises:
a user terminal state obtaining unit, configured to obtain state information of the user terminal; and
a sending unit, configured to send the media content recommendation information generated by the media content recommendation information generating unit to the user terminal when the user terminal state obtained by the user terminal state obtaining unit is online, or send the media content recommendation information generated by the media content recommendation information generating unit to a preset user terminal associated with the user terminal when the user terminal state obtained by the user terminal state obtaining unit is offline.

19. The apparatus of claim 14, further comprising a media content recommendation service state obtaining unit, wherein:
the media content recommendation service state obtaining unit is configured to obtain media content recommendation service state information of the user terminal; and
the trigger event detecting unit is further configured to detect media content recommendation trigger events when the media content recommendation service state of the user terminal obtained by the media content recommendation service state obtaining unit is active.

20. The apparatus of any of claims 14 to 19, wherein the media content recommending apparatus is located in an Internet Protocol Television (IPTV) application server, an independent content recommendation server, an IPTV media function network element, or an IP Multimedia Subsystem (IMS) core network element.

21. A system for recommending media content, comprising:
a media content recommending apparatus, configured to generate media content recommendation information according to a preset media content recommendation policy when detecting a media content recommendation trigger event and send the media content recommendation information; and
a user terminal, configured to receive and display the media content recommendation information sent by the media content recommending apparatus.

22. The system of claim 21, wherein the media content recommending apparatus sends the media content recommendation information to the user terminal through a signaling path or a media path.
